# EUROPEAN PATENT APPLICATION

(11) **EP 2 390 495 A1**
(43) Date of publication of application: **30.11.2011**
(21) Application number: 10733365.0
(22) Date of filing: 21.01.2010
(51) Int. Cl.: F03B 13/24

(54) **WAVE MOTION-TPE ELECTRIC POWER GENERATOR AND WAVE MOTION-TYPE VESSEL**

(30) Priority: 22.01.2009 JP 2009012042
(71) Applicant: Yoon, Jungman, Tokyo 140-0002 (JP)
(72) Inventor: Yoon, Jungman, Tokyo 140-0002 (JP)
(74) Representative: Polypatent
(86) International application number: PCT/JP2010/000333
(87) International publication number: WO 2010/084757

(57) **Abstract**

This invention is to provide a wave power generator that can be produced with low costs for generating power in use of force of wave reaching ships periodically during voyages of ships. The wave power generator of the invention comprises a compressed air producing unit having a restoring member whose shape returns to an original shape after air contained in the restoring member is exhausted where a coving member containing the restoring member is contracted, a compressed air storing unit connected in air communication with the compressed air producing unit for temporarily storing the exhausted air, a compressed air turbine unit connected in air communication with the compressed air storing unit for producing rotary drive force from the exhausted air temporarily stored, and a power generating unit connected with the compressed air turbine unit for generating power from the rotary drive force.

## Description

### BACKGROUND OF THE INVENTION

### 1. Field of the Invention

This invention relates to a power generator converting energy of wave breaking at a ship or the like into compressed air and generating power by utilizing the compressed air.

### 2. Description of Related Art

There has been known a structure in which a float generates power in use of wave occurring at such as sea shore zone, in relation, to a compact platform ship for generating power utilizing wave energy to be used as a power source for fishery related facilities (see, e.g., Patent Document #1).

There also has been known a structure in which a turbine is continuously driven in utilizing alternative inclinations of an ocean floating arrangement due to wave or swell in relation to a wave energy use ocean power generator (see, e.g., Patent Document #2).

Patent Document #1: Japanese Patent Application Publication, No. Hei05-164,036.
Patent Document #2: Japanese Patent Application Publication, No. 2001-193626.

The aforementioned structures, however, raise problems such as high costs to produce the power generator.

It is therefore an object of the invention, in consideration of the aforementioned technical problems, to provide a wave power generator that can be produced with low costs for generating power using force of wave periodically breaking at a ship when the ship voyages.

### BRIEF SUMMARY OF THE INVENTION

To solve the above problems, the wave power generator according to the invention comprises a compressed air producing unit having a restoring member whose shape returns to an original shape after air contained in the restoring member is exhausted where a coving member containing the restoring member is contracted; a compressed air storing unit connected in air communication with the compressed air producing unit for temporarily storing the exhausted air; a producing rotary drive force from the exhausted air temporarily stored; and a power generating unit connected with the compressed air turbine unit for generating power from the rotary drive force.

According to the ship driven by wave power with an installation of the invented wave power generator, the wave power generator that can be produced with lower costs is installed therein, allowing generating power in use of force of the wave periodically coming to the ship driven by wave power when the ship driven by wave power voyages.

### BRIEF DESCRIPTION OF THE SEVERAL VIEWS OF THE DRAWINGS

Fig. 1 is a structural view showing a wave power driven ship in which a wave power generator according to a first embodiment of the invention is installed;
Fig. 2 is a structural view showing a compressed air producing unit of the wave power generator according to the first embodiment of the invention;
Figs. 3(a) through 3(g) are schematic views showing operational principle of the compressed air producing unit of the wave power generator according to the first embodiment of the invention, each of which shows respective steps of expansion of an air bag of the compressed air producing unit contacting to wave after the air bag is contracted;
Fig. 4 is a schematic view showing a compressed air producing unit for a wave power generator of a raft use type according to a second embodiment of the invention;
Fig. 5 is a schematic view showing a compressed air producing unit for a wave power generator of a vehicle use type according to a third embodiment of the invention;

### DETAILED DESCRIPTION OF THE INVENTION

Hereinafter, preferred embodiments of the wave power generator and the ship driven by wave power according to the invention are described with reference to the drawings. It is to be noted that the invented wave power generator and the invented ship driven by wave power are not limited to the following description, but can be modified as far as within the scope of the invention.

### First Embodiment

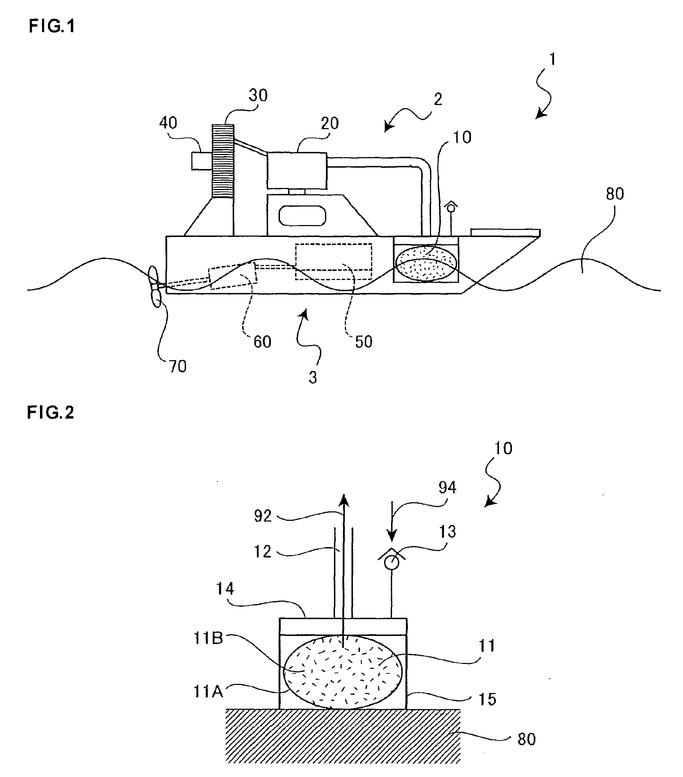

First of all, the structures of a wave power generator 2 and a ship 2 driven by wave power are described in detail with reference to Fig. 1 and Fig. 2. Fig. 1 is a structural view showing the wave power driven ship 1 in which the wave power generator 2 is installed; Fig. 2 is a structural view showing a compressed air producing unit 10 of the wave power generator 2.

The wave power driven ship 1 is constituted of the wave power generator 2 and a thruster 3. The wave power generator 2 is constituted of a compressed air production unit 10, a compressed air storing unit 20, a compressed air turbine unit 30, and a power generation unit 40. Similarly, the thruster 30 is constituted of a battery 50, a motor 60, and a propeller 70. First, the respective units constituting the wave power generator 2 are described, and then the respective units constituting the thruster 3 are described.

Referring to Figs. 1, 2, a structure of the compressed air production unit 10 serving as an important member for forming the wave power generator 2 is described in detail. It is to be noted that Fig. 2 is a structural view showing the compressed air production unit 10 of the wave power generator 2.

The compressed air production unit 10 is formed of an airbag 11, an exhaust pipe 12, an intake pipe 13, and a top partition board 14, and a side wall member 15. Hereinafter, the respective structural members forming the compressed air production unit 10 are described.

The airbag 11 constituting the compressed air production unit 10 is formed of a covering member 11A and a restoring member 11B. The covering member 11A is made of, e.g., a polyurethane elastomer and formed in a shape of a bag. The restoring member 11B is filled inside the covering member 11A formed in the bag shape and is made of a urethane in a sponge form.
The covering member 11A of the airbag 11 thus formed are in connection and air communication with the exhaust pipe 12 and the intake pipe 13 as described below at an end thereof.

The exhaust pipe 12 forming the compressed air production unit 10 is a connecting pipe for transferring the compressed air 92 generated inside of the airbag 11 periodically contracting according to wave's breaking to the compressed air storing unit 20. The exhaust pipe 12 thus formed is made of a metal and formed in combination with cylindrical members in a prescribed shape. The exhaust pipe 12 is arranged in penetrating the top partition board 14 and is connected to and in air communication with the end of the airbag 11. With the exhaust pipe 12, compressed air 92 is exhausted from the airbag 11 to the exhaust pipe 12 where the airbag 11 comes contracted from the state of expansion. It is to be noted that because the exhaust pipe 12 is formed with a check valve not shown no air escapes from the exhaust pipe 12 to the airbag 11 when the airbag 11 I expands.

Similarly, the intake pipe 13 forming the compressed air production unit 10 is arranged as to penetrate the top partition board 14 as described below and is connected in air communication with one end of the airbag 11. The intake pipe 13 thus formed is made of a metal and is in a cylindrical shape. When the airbag 11 expands from the contracted state, the atmospheric air 94 is absorbed into the airbag 11 through the intake pipe 13. It is to be noted that because the intake pipe 13 is formed with a check valve not shown no air escapes from the airbag 11 to the intake pipe 13 when the airbag 11 contracts.

Similarly, the top partition board 14 forming the compressed air production unit 10 is made of a metal and in a shape of a board. The top partition board 14 thus formed is arranged at the top of the airbag 11 and holds from its top side the airbag 11 periodically contracting and expanding according wave's breaking movement. It is to be noted that the top partition board 14 supports the exhaust pipe 12 and the intake pipe 13 described above as penetrating there through.

The side wall member 15 forming the compressed air production unit 10 is made of a metal and in a shape of a board. The side wall member 15 thus formed is arranged as to contact to an outer periphery of the airbag 11 and is connected to the top partition board 14. The side wall member 15 protects the airbag 11 periodically contracting and expanding from its side surface against the wave 91 breaking into the airbag 11.

The compressed air storing unit 20 forming the wave power generator 2 is described next. The compressed air storing unit 20 is made of a metal and in a cylindrical shape. The compressed air storing unit 20 is connected in air communication with the compressed air production unit 10 and the compressed air turbine unit 30. The compressed air storing unit 20 thus formed conveys the compressed air 92 supplied from the compressed air production unit 10 to the compressed air turbine unit 30 described below after temporarily storing the compressed air 92. It is to be noted that the compressed air 92 is temporarily stored by the compressed air storing unit 20 and then transferred to the compressed air turbine unit 30 after the pressure of the compressed air 92 is approximately averaged otherwise deviated as time goes.

The compressed air turbine unit 30 forming the wave power generator 2 rotates the turbine by the compressed air 92 supplied from the compressed air storing unit 20, and rotates a shaft, not shown, arranged at the compressed air turbine unit 30. That is, the compressed air turbine unit 30 is to convert the pressure of the compressed air 92 into the rotation energy of the shaft. More specifically, as the compressed air turbine unit 30 thus formed, a steam turbine apparatus can be used as described in specification of Japanese Patent Application No. 2008-234844 filed by the same inventor to this invention.

Similarly, the power generator 40 forming the wave power generator 2 is connected to the shaft, not shown, of the compressed air turbine unit 30, and converts the rotation energy of the shaft into electric power. The electric power produced at the wave power generator 2 is fed to a battery 50 forming the thruster 3.

Next, the respective structural members forming the thruster 3 are described. The battery 50 forming the thruster 3 charges the electric power supplied from the wave power generator 2 or charges electric power fed from an external apparatus while the ship is in harbor at a sea shore.
The motor 60 drives to rotate the shaft connected to the motor 60 based on prescribed control upon reception of the electric power from the battery 50. The propeller 70 is connected to the shaft of the motor 60, and propels the wave driven ship I according to prescribed control by means of propeller's rotation driven by the shaft.

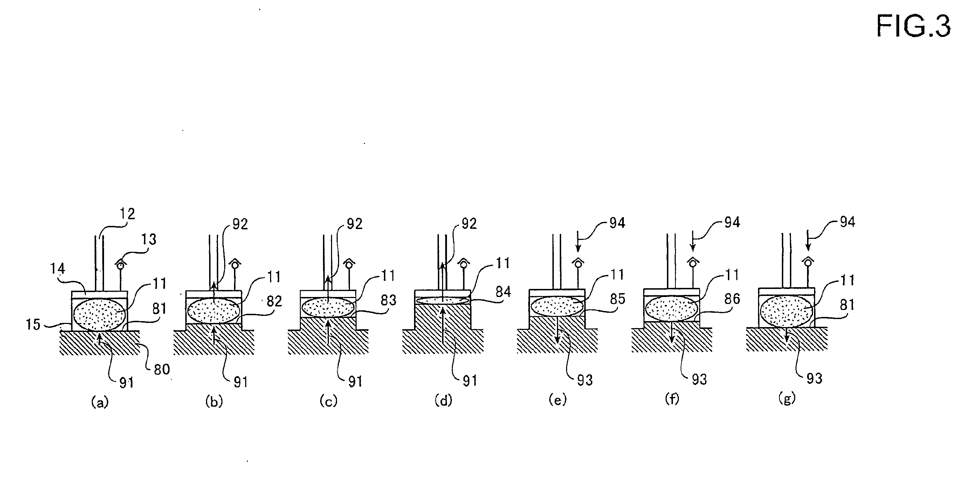

Next, operation principle of the compressed air production unit 10 serving as an important structural member of the wave power generator 2 arranged at the wave driven ship 1, is described in detail with reference to Fig. 3. Figs. 3(a) to (g) are schematic views showing operational principle of the compressed air producing unit 10 of the wave power generator 2; Figs. 3(a) through 3(g) are schematic views showing respective steps of expansion of an airbag 11 of the compressed air producing unitl0 0 contacting to wave after the airbag 11 is contracted.

Where the wave 91 arrives to the airbag 11 of the compressed air production unit 10, a sea level 81 of the sea 80 contacts with pressure as shown in Fig. 3(a). Further, where the wave 91 successively arrives to the airbag 11 of the compressed air production unit 10, the sea level of the sea rises from the sea level 81 to a sea level 82, and a sea level 83 sequentially, thereby contracting the airbag 11 as to reduce the volume with a prescribed amount. Where the airbag 11 is thus contracted as to reduce the volume with the prescribed amount, the compressed air 92 is discharged to the exhaust pipe 12 in accordance with the contracted amount.

Where the wave 91 further arrives to the airbag 11 of the compressed air production unit 10, the airbag 11 is made contracted to a maximum extent upon rising the level up to the sea level 84 of the sea 80 as shown in Fig. 3(d). When the airbag 11 is contracted in this way to the maximum extent, the compressed air 92 is exhausted to the exhaust pipe to the maximum extent. Subsequently, where the wave 93 a little goes down according to recovering force of the airbag 11 of the compressed air production unit 10, the level of the sea 80 moves down to the sea level 85 as shown in Fig. 3(e), thereby a little expanding the airbag 11. The atmospheric air 94 is absorbed to the airbag 11 through the exhaust pipe 13 where the airbag 11 expands a little in this way.

The wave 93 subsequently moves down in association with the recovering force of the airbag 11 of the compressed air production unit 10, the level of the sea 80 moves down from a sea level 85 to a sea level 86 as shown from Fig. 3(e) to Fig.3(f), thereby expanding the airbag 11 as to increase the volume with a prescribed amount. The atmospheric air 94 is further absorbed through the exhaust pipe 13according to the expanded volume where the airbag 11 thus expands with the prescribed amount. Where the wave 93 moves down in association with the recovering force of the airbag I of the compressed air production unit 10, the level of the sea 80 moves down from the sea level 86 to the sea level 81 as shown from Fig. 3(g), thereby expanding the airbag 11 to a maximum extent, and thereby returning the airbag 11 as to have the original volume which is the same as the airbag 11 shown in Fig. 3(a). The atmospheric air 94 is absorbed to the airbag 11 through the exhaust pipe 13 to the maximum extent where the airbag 11 thus expands to the maximum extent.

Because the wave 91 always arrives in a periodical way to the airbag 11 of the compressed air production unit 10 during voyages of the wave driven ship 1, the operation in association with the airbag shown in Fig. 3(a) to Fig.3(g) is done continuously. Accordingly, where the airbag 11 always contracts and expands repetitively during the voyages of the wave driven ship 1, the compressed air 92 is periodically discharged to the exhaust pipe 12.

With the wave driven ship 1 according to the first embodiment, the compressed air 92 is produced by continuously contracting and expanding the airbag 11 in use of the wave 91 periodically coming to the airbag 11 of the compressed air production unit 10 arranged with the wave power generator 2 while the wave driven ship I equipped with the wave power generator 2 that can be produced with low costs is in voyage, thereby generating electric power by the compressed air 92 in use of the compressed air turbine unit 30 and the power generation unit 40. That is, according to the wave driven ship 1 of the first embodiment, electric power can be produced by generating the power in use of the natural wave 91.

According to the wave driven ship 1 of the first embodiment, the airbag 11 of the compressed air production unit 10 can absorb impacts due to the wave 91 coming periodically, thereby providing good on-board feeling to a crew boarding on the wave driven ship 1.

### Second Embodiment

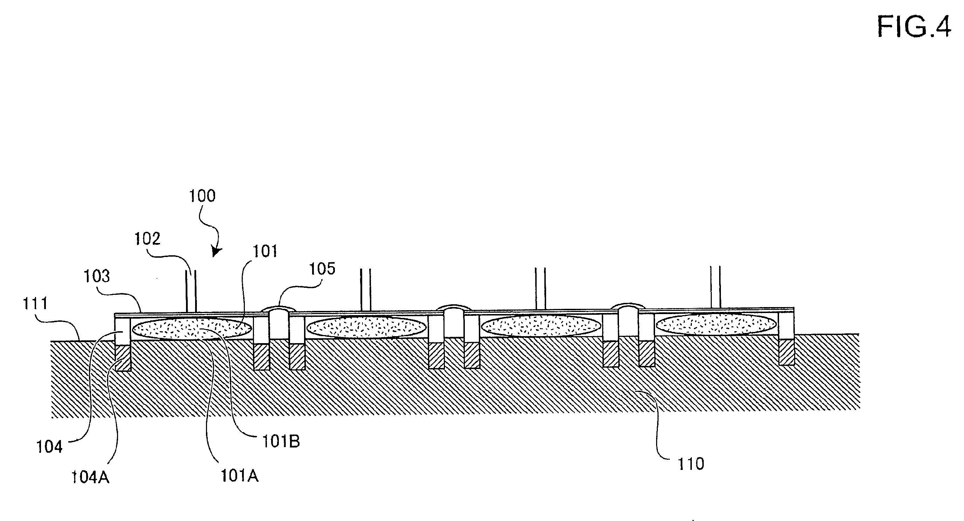

Next, a wave power generator of a raft use type according to a second embodiment of the invention is described with reference to Fig. 4. Fig. 4 is a schematic view showing a compressed air producing unit 100 forming a wave power generator of a raft use type.

The wave power generator of the raft use type according to the second embodiment is provided at a sea level 111 of the sea 110 such as a pier or waterfront, thereby producing compressed air by the wave force coming periodically, and thereby generating power with the compressed air. The wave power generator of the raft use type has a feature of a raft structure of the compressed air producing unit 100 forming the wave power generator of the raft use type. It is to be noted that the structure and operation principle other than the compressed air producing unit 100 of the wave power generator of the raft use type according to the second embodiment are substantially the same as those of the wave power generator 2 according to the first embodiment.

More specifically, a compressed air storing unit, a compressed air turbine unit, and a power generation unit forming the wave power generator of the raft use type according to the second embodiment have substantially the same structure and operation principle as those of the compressed air storing unit 20, the compressed air turbine unit 30, and the power generation unit 40, which are forming the wave power generator 2 according to the first embodiment. Referring to Fig.4, the wave power generator of the raft use type according to the second embodiment, with the structure of the compressed air production unit 100 different from the compressed air production unit 10 in the first embodiment as a core, is described more specifically.

The compressed air production unit 100 is made to stay in a plural number in a connecting manner at a sea surface level of the sea 110 at such as, e.g., a pier or waterfront. The compressed air production unit 100 thus formed The compressed air production unit 100 thus provided is constituted of a airbag 101, a pipe 102, a metal mesh plate 103, a tank 104, and a connecting member 105. The airbag 101 has substantially the same structure as that of the airbag 11 in the first embodiment except its shape, and any duplicated description thereof is omitted. The pipe 102 has substantially the same structure as that of the exhaust pipe 12 in the first embodiment, and any duplicated description thereof is omitted. Therefore, the metal mesh plate 103, the tank 104, and the connecting member 105 for forming the compressed air production unit 100 are described below.

The metal mesh plate 103 forming the compressed air production unit 100 is a member corresponding to the top partition plate 14 according to first embodiment, and is made of a metal and formed of a plate whose surface is in mesh. The metal mesh plate 103 thus formed is arranged at a top of the airbag 101, and prevents the airbag 101 in reach of the wave from floating to the sea level 111 without contracting. The metal mesh plate 103 also has a function of the intake pipe 13 in the first embodiment because of having the mesh allowing air communication.

The tank 104 forming the compressed air production unit 100 is a member corresponding to the side wall member 15 in the first embodiment, and is made of a metal and foamed of a cylindrical member. The tank 104 thus formed is arranged adjacent to both sides of the airbag 101 and connected to the metal mesh plate 103. More specifically, the tank 104 prevents the mental mesh plate 103 urged to the airbag 101 in reach of the wave from moving up and down with respect to the sea level 111. It is to be noted that water 104A is contained as a weight inside the tank 104.

The connecting member 105 forming the compressed air production unit 100 is a member for connecting between the compressed air production units 100 arranged side by side. The connecting member 105 is formed of a chain or the like made of, such as, e.g., a metal, and is connected to an end of the metal mesh plate 103 of the respective compressed air production units 100. It is to be noted that use of the connecting member 105 prevents the compressed air production units 100 arranged in a plural number at the sea 110 at the pier or waterfront from being disengaged due to force of the wave reaching periodically.

According to the wave power generator of the raft use type according to the second embodiment, the wave power generator of the raft use type that can be produced with low costs, arranged at the sea level 111 of the sea 110, such as, e.g., the pier or waterfront, can produce the compressed air by continuously contracting and expanding the airbag 101 in use of the wave periodically reaching the airbag 101 of the compressed air production unit 100, thereby generating the power at the compressed air turbine unit and the power generator from the compressed air.
That is, in accordance with the wave power generator of the raft use type that can be produced with low costs according to the second embodiment, electric power can be generated with power generation in use of natural wave force.

### Third Embodiment

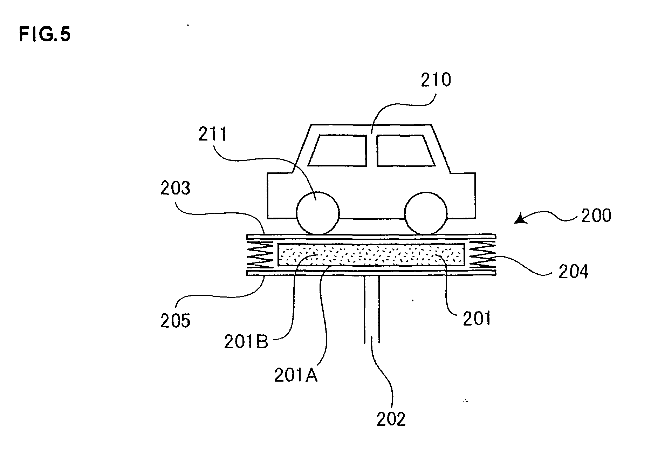

Referring to Fig. 5,a wave power generator of a vehicle use type according to the third embodiment of the invention is described. Fig. 5 is a schematic view showing a compressed air producing unit 200 for forming a wave power generator of a vehicle use type.

The wave power generator of the vehicle use type according to the third embodiment is disposed at a road surface at, such as, e.g., a toll gate of highways, an intersection of local roads, etc., and generates the electric power by the compressed air upon producing the compressed air from pressing force of wheels of vehicles contacting the roads successively. The wave power generator of the vehicle use type has a feature of a thin structure of the compressed air producing unit 200 forming the wave power generator of the vehicle use type. It is to be noted that the structure and operation principle other than the compressed air producing unit 200 of the wave power generator of the vehicle use type according to the third embodiment are substantially the same as those of the wave power generator 2 according to the first embodiment.

More specifically, a compressed air storing unit, a compressed air turbine unit, and a power generation unit forming the wave power generator of the vehicle use type according to the third embodiment have substantially the same structure and operation principle as those of the compressed air storing unit 20, the compressed air turbine unit 30, and the power generation unit 40, which are forming the wave power generator 2 according to the first embodiment. Referring to Fig.5, the wave power generator of the vehicle use type according to the third embodiment, with the structure of the compressed air production unit 200 different from the compressed air production unit 10 in the first embodiment as a core, is described more specifically.

The compressed air producing unit 200 is arranged at a road surface at, such as, e.g., a toll gate of highways, an intersection of local roads, etc. The compressed air producing unit 200 thus formed is constituted of an airbag 201, a pipe 202, a protection plate 203, a spring 204, and a support plate 205. The airbag 201 has substantially the same structure as that of the airbag 11 in the first embodiment except its shape, and any duplicated description thereof is omitted. The pipe 202 has substantially the same structure as that of the exhaust pipe 12 in the first embodiment, and any duplicated description thereof is omitted. Therefore, the protection plate 203, the spring 204, and the support plate 205 for forming the compressed air producing unit 200 are described below.

The protection plate 203 forming the compressed air producing unit 200 is made of a metal and formed of a plate. The protection plate 203 thus formed is arranged at a top of the airbag 201 and protects, from the top side thereof, the airbag 201 successively expanding and contracting by pressurized contacts from the wheels 211 of vehicles 210 through the protection plate 203.

The spring 204 forming the compressed air producing unit 200 is made of a metal or rubber and formed in a spiral shape. The spring 204 thus formed is arranged adjacently to both sides of the airbag 201 and connected to the protection plate 203. More specifically, the spring 204 supports the expandable airbag 201 which successively expands and contracts by pressurized contacts from the wheels 211 of vehicles 210 through the protection plate 203.

The support plate 205 forming the compressed air producing unit 200 is a member corresponding to the top partition member 14 according to the first embodiment, and made of a metal and formed in a plate shape. The support plate 5 is arranged below the airbag 201 and supports, from the lower surface, the airbag 201 which successively expands and contracts by pressurized contacts from the wheels 211 of vehicles 210 through the protection plate 203.

According to the wave power generator of the vehicle use type according to the third embodiment, the wave power generator of the vehicle use type that can be produced with low costs, arranged at road surfaces at, such as, e.g., a toll gate of highways, an intersection of local roads, etc., can produce the compressed air by continuously contracting and expanding the airbag 201 in use of the pressurized contacting force from the wheels 211 of vehicles 210 which are contacting successively through the protection plate 203, thereby generating the power at the compressed air turbine unit and the power generator from the compressed air. That is, in accordance with the wave power generator of the vehicle use type that can be produced with low costs according to the third embodiment, electric power can be generated with power generation in use of the pressurized contacting force from the wheels 211 of vehicles 210.

It is to be noted that in the first to third embodiments as described above, the wave power generator having the compressed air producing unit is described as the power generator of wave driven type in use of ships, rafts, and vehicles, but the invention is not limited to the above described structures. For example, the wave power generator having the compressed air producing unit can be a wave power generator utilizing natural wind force.

### Description of Reference Number

- 1: Wave driven ship
- 2: Wave power generator
- 3: Thruster
- 10: Compressed air producing unit
- 11: Airbag
- 11A: Covering member
- 11B: Restoring member
- 12: Exhaust pipe
- 13: Intake pipe
- 14: Top partition plate
- 15: Side wall member
- 20: Compressed air storing unit
- 30: Compressed air turbine unit
- 40: Power generation unit
- 50: Battery
- 60: Motor
- 70: Propeller
- 80: Sea
- 81 to: 86 Sea level
- 91: Wave
- 92: Compressed air
- 93: Wave
- 94: Atmospheric air
- 100: Compressed air producing unit
- 101: Airbag
- 101A: Covering member
- 101B: Restoring member
- 102: Pipe
- 103: Metal mesh plate
- 104: Tank
- 104A: Water
- 105: Connecting member
- 110: Sea
- 111: Sea level
- 200: Compressed air producing unit
- 201: Airbag
- 201A: Covering member
- 201B: Restoring member
- 202: Pipe
- 203: Protection plate
- 204: Spring
- 205: Support plate
- 210: Vehicle
- 211: Wheel

## Claims

1. A wave power generator comprising:
a compressed air producing unit having a restoring member whose shape returns to an original shape after air contained in the restoring member is exhausted where a coving member containing the restoring member is contracted;
a compressed air storing unit connected in air communication with the compressed air producing unit for temporarily storing the exhausted air;
a compressed air turbine unit connected in air communication with the compressed air storing unit for producing rotary drive force from the exhausted air temporarily stored; and
a power generating unit connected with the compressed air turbine unit for generating power from the rotary drive force.

2. The wave power generator according to claim 1, wherein the compressed air producing unit has an exhaust pipe having a check valve function, and wherein the exhaust pipe exhausts the air contained in the restoring member to the compressed air storing unit at a time that the covering member containing the restoring member is contracted.

3. The wave power generator according to claim 1, wherein the compressed air producing unit has an exhaust pipe having a check valve function, and wherein the exhaust pipe intakes air from the atmospheric air so that the restoring member restores the original shape thereof after the covering member containing the restoring member is contracted.

4. A ship driven by wave power according to any one of claims 1 to 3, wherein the wave power generator is installed at a ship, and wherein the covering member containing the restoring member is contracted by the force of wave coming in pressurized contact with the ship during the voyage of the ship.

5. A wave power generator used for a raft with the wave power generator according to claim 1, wherein the wave power generator is installed at a raft, and wherein the covering member containing the restoring member is contracted by the force of wave coming in pressurized contact with the raft.

6. A wave power generator used for a vehicle with the wave power generator according to claim 1, wherein the wave power generator is installed at a road, and the covering member containing the restoring member is contracted by pressure of a wheel of the vehicle in pressurized contact with the road.
